# EUROPEAN PATENT APPLICATION

(11) **EP 0 826 412 A2**
(43) Date of publication of application: **04.03.1998**
(21) Application number: 96120279.3
(22) Date of filing: 17.12.1996
(51) Int. Cl.: B01D 61/14, B01D 61/18, B01D 39/16, B01D 29/11, B01D 15/08, B01J 20/00

(54) **Method for producing filter elements and the filter elements thus produced**

(30) Priority: 26.08.1996 EP 96113653
(71) Applicant: Max-Planck-Gesellschaft zur Förderung der Wissenschaften e.V. Berlin, 80539 München (DE)
(72) Inventor: Mehl, Ehrenfried Dr., 81479 München (DE); Lottspeich, Friedrich, Dr., 82131 Stockdorf (DE)
(74) Representative: VOSSIUS & PARTNER

(57) **Abstract**

The invention relates to a method for producing a filter element by generating a microporous element, comprising the steps of providing a liquid suspension of microparticles (3); applying the liquid suspension to at least one microporous retainer (1); and causing solidification in spongy form of at least part of the suspension.

The invention further relates to a filter element comprising at least one microporous element including at least one microporous retainer (1) and a spongy-form-polymer (2) embedding microparticles (3) and being linked to the at least one microporous retainer.

## Description

The present invention relates to novel methods for producing filter elements which comprise a microporous element. Such filter elements are commonly used for micro filtration, for example for solid-liquid separation, clearing of solutions, harvesting bacteria, and the like. Filter elements are also used for column chromatography, adsorption/immobilisation of proteins, for instance biocatalysts, as retainer for granular material.

There is an increasing demand in the area of analytical chemistry for devices capable of handling moderate to small sample volumes, in a manner which is rapid, gives high recovery and minimizes any possibility of sample contamination. Among other desired attributes are low cost, ease of manufacture and suitability for application with conventional equipment.

Previous devices for micro filtration etc. involve the use of preformed filter material. Synthetic polymers such as nylon, methacrylate or semisynthetic polymers such as nitro cellulose, or cellulose acetate have been used over decades. Mostly the filter material is a nonwoven material which is formed from a web of synthetic or natural fibers. The fibers may or may not be bonded together by a binder. In general, discs are cut from the nonwoven material and positioned within a sample tube or the like.

In this context, the filter disc may be attached to the filter tube by an adhesive; additionally or alternatively, the filter disc may be welded into the filter tube by locally applying heat or by ultrasonic treatment.

When using an adsorptive filter containing granular adsorptive microparticles, the problem of dislocation might occur during processing of a liquid and also during transportation. Therefore, the microparticles are held for example in between two confining porous elements, such as frits, nets, annular or grooved retainers at both porous sides of the filter element. Even when embedded between fibers of teflon or glass, an upper porous retainer as well as a lower supporting frit, net or grooved element might be necessary.

Taking the aforementioned aspects into consideration, it is therefore an object of the present invention to provide a cost-effective method for producing a filter element, which can be applied for most versions of analytical or micro preparative liquid chromatography such as affinity chromatography, immuno chromatography as well as for binding studies enabling also the isolation of multi component binding complexes. The filter elements may be especially useful in biotechnology, in molecular biology and in medical biochemical diagnostics, allowing low-cost screening of hundreds of samples in parallel. The present invention particularly aims at a method preventing the dislocation of microparticles, improved or simplified by applying selected suitable techniques, avoiding unspecific loss of biopolymer by presenting biocompatible surfaces, and saving cost by using expensive microparticle material in very small amounts. In addition transfer of separated substances from the filter to blotting membranes shall be rendered possible without having problems with dead volumes.

In its broadest aspect, the present invention relates to a method for producing a filter element by generating a microporous element, comprising the steps of providing a liquid suspension of microparticles; applying the liquid suspension to at least one microporous retainer; and causing solidification in spongy form of at least part of the suspension.

The microparticles may be linked together with each other and may be linked to the at least one microporous retainer under maintenance of microporosity.

In a first embodiment, the present invention relates to a method for producing a filter element by generating a microporous element, comprising the steps of providing a solution of a synthetic or semi-synthetic resin in a solvent, including microparticles suspended therein; applying the solution to at least one microporous retainer; and causing a nonsolvent to diffuse into the layer, which nonsolvent is miscible with the solvent, whereby the synthetic resin precipitates to form the microporous element.

Preferably the resin is selected from the group consisting of polyvinyl esters, partially deacylated polyvinyl esters, cellulose derivatives, polyamides, and mixtures thereof. Among polyvinyl esters polyvinyl acetate, polyvinyl propionate, polyvinyl stearate, and polyvinyl cinnamic acid ester; among cellulose derivatives nitrocellulose, and cellulose propionate are to be mentioned. A suitable polyamide is Nylon 6/6.

In certain instances, the resin preferably comprises both hydrophilic and hydrophobic segments within its molecules. Suitable resins include poly(vinyl alcohol-co-ethylene), poly(vinyl alcohol-co-vinylacetate), ethylene acrylic acid copolymer, ethylene acrylic ester copolymer, ethylene acrylamide copolymer, acrylic acid vinylacetate copolymer, acrylamide vinylacetate copolymer, copolymer of acrylic acid diamine monoamide with vinylacetate, poly(vinyl alcohol-co-styrene), acrylamide acrylic ester copolymer, and mixtures thereof. Specifically, copolymers of acrylamide with hexyl acrylate, propyl acrylate or dodecyl acrylate are useful.

Preferably the solvent is selected from dimethyl sulfoxide, dimethylformamide, dimethylacetamide, formamide, formic acid, acetic acid, 2,2,2-trichloro ethanol, and mixtures thereof.

Preferably the nonsolvent is selected from water, alcohols having one to four carbon atoms, ammonia, ethylacetate, acetone, ethylenediamine, and mixtures thereof. The nonsolvent may be either liquid or gaseous.

The various methods of causing the nonsolvent to diffuse into the liquid layer of the resin solution will be exemplified with reference to a support having the form of a tube but will not be limited thereto. A liquid nonsolvent may be brought into contact with the liquid layer of resin solution from one or both sides thereof, for example by dipping the end of the tube at which the layer of resin solution is positioned into a liquid nonsolvent. Additionally or alternatively, nonsolvent may be introduced from the distant end of the tube. If a gaseous nonsolvent is to be used, the arrangement of support with layer of resin solution is positioned within an atmosphere which is saturated or nearly saturated with the vapours of the nonsolvent. Precipitation may also be accomplished in two successive steps by firstly applying gaseous nonsolvent and, after partial solidification, subsequently applying liquid nonsolvent.

Plane upper and lower surfaces of the microporous element are obtained when the final concentration of nonsolvent in the resin solution during precipitation is raised to about 50% by weight. A plane upper surface allows for a more uniform filtration performance of the filter element. A plane lower surface provides even contact with, for example, blotting membranes onto which an adsorbed material is to be transferred.

Especially favourable results are obtained when one of the following combinations of resin/solvent/nonsolvent is used: one of poly(vinylalcohol-co-ethylene), nitrocellulose, cellulose propionate, or polyvinylacetate as resin, dimethyl sulfoxide as solvent and water as nonsolvent; or polyamides (like Nylon 6,6) as resin, 2,2,2-trichloro ethanol as solvent and acetone as nonsolvent.

Without intending to be bound to theory it is believed that in generating the microporous element according to this first embodiment of the present invention the following mechanisms are involved:

When the nonsolvent diffuses into the layer of resin solution, the solubility of the resin is gradually decreased. As the limit of solubility is reached the resin begins to precipitate from the solution at individual points. The precipitation of the resin proceeds at the points of initial precipitation. Ultimately, the solvent/nonsolvent is enclosed in large interconnecting enclaves in a solid matrix of resin. The interconnecting enclaves form the liquid-permeable channels of the final microporous element. If a synthetic resin is used which comprises both hydrophilic and hydrophobic segments, the hydrophobic segments will be forced towards each other and brought into contact with each other as the concentration of nonsolvent in the resin solution increases. There will be interactions between the hydrophobic segments of neighbouring molecule chains, which result in the formation of a crystalline hydrophobic backbone of the precipitated resin. The hydrophilic segments will be oriented towards the enclaves filled with solvent/nonsolvent. Accordingly, a microporous element is obtained where the liquid-permeable channels are predominantly hydrophilic. This provides the benefit of biocompatibility. The term "biocompatibility" means that the three-dimensional structure of biopolymers, for example proteins, is maintained. The interphase forces are less destructive when the polymer surface is rich in hydroxyl, amide or ether groups.

In order to modify the adsorptive properties of the microporous element, the solution of the synthetic resin further comprises solid microparticles. The microparticles may be composed of silicon dioxide, silica gel, aluminium oxide, titan dioxide, zirconium oxide, glass, carbon or graphite. Also, the microparticles can be composed of inorganic material, such as calcium phosphate, zinc polyphosphate or the like. Another type of granular microparticles consists of an inorganic core such as microporous silicagel with a microlayer of organic polymer. The pores and the surface of the grain may be modified in a way, that macromolecules are restricted from penetrating into the pores ("restricted access material"). Also, the microparticles may consist of organic material such as a powder of cured resin, or highly crosslinked polysaccharides, as are available under the Superdex tradename, however care has to be taken in selecting an organic material in that it must not be soluble in the solvent used. The microparticles can be non-porous or porous, but preferably are porous with a preferred pore size in the range of 1 nm to 500 nm. Generally, the microparticles have a size from 5 nm to 500 µm, in particular from 0.5 µm to 30 µm, however porous microparticles preferably have a size of 1 µm or more, whereas non-porous microparticles preferably have a size of 1 µm or less. The microparticles can be pretreated, for instance derivatized, such that the adsorbent properties thereof meet specific requirements. Any kind of commercially available adsorbent particles as used for solid phase extraction or chromatography, such as affinity chromatography with proteins, antibodies, peptides, carbohydrates, nucleic acids, or for ion exchange chromatography, immuno chromatography, hydrophobic interaction chromatography, chelating chromatography and reversed phase chromatography are useful. Materials suited for high performance liquid chromatography are especially useful. For example proteins, such as specific antibodies, lectins, avidin, receptor-proteins, enzymes, synthetic peptides, nucleic acids or oligonucleotides may be attached to the microparticles, either covalently or via linkers. The adsorbent particles have a granular shape, for example spherical and/or with irregular surfaces, but not necessarily fibrillar.

In the final microparticle-containing filter element, the outer or inner surfaces of the enclosed microparticles are accessible to an applied liquid sample, and adsorption/immobilization of analytes contained in the liquid sample can take place.

In a second embodiment, the invention relates to a method for producing a filter element by generating a microporous element, comprising the steps of providing an aqueous solution of a hydrocolloid, which comprises microparticles slurried therein; applying the solution to at least one microporous retainer; causing the hydrocolloid solution to solidify; and optionally, one or both of desiccating and crosslinking the solidified hydrocolloid solution.

Preferably, the hydrocolloid is selected from low melting agarose, starch, polyvinyl alcohol, and mixtures thereof. The aqueous solution of the hydrocolloid contains preferably 1 to 10% by weight, in particular 2 to 5% by weight of the solution, of the hydrocolloid. When polyvinyl alcohol is used as the hydrocolloid, the addition of up to 0,2% by weight of the solution, of sodium tetraborate or of up to 50% by weight of the solution, of dimethyl sulfoxide is sometimes advantageous.

These hydrocolloids are poorly soluble in cold water, however disperse or dissolve upon heating. Preferably, a hot hydrocolloid solution is applied to the aperture of the carrier. Upon cooling, the hydrocolloid solution solidifies.

In one alternative, the solidified hydrocolloid solution is subsequently desiccated. Desiccation can be accelerated by heating the arrangement to a temperature of about 40°C. Alternatively, in particular when using heat sensitive material, desiccation can be achieved by placing the arrangement in a closed chamber over a desiccating agent such as phosphorus pentoxide. The final moisture content preferably is less than 1 mbar water vapor partial pressure.

Upon desiccation, the solidified layer of hydrocolloid solution shrinks. In absence of the microparticles mentioned above, the solidified layer of hydrocolloid solution would shrink away with the effect that no useful filter element would be obtained. According to the invention, microparticles are provided in the aqueous solution of hydrocolloid which act as pore-forming agent during desiccation. Accordingly, a plurality of microscopic cracks between the microparticles are formed upon desiccation. Also, the microparticles act so as to control or modify the adsorptive properties of the layer thus obtained. The microscopic cracks act as the liquid-permeable channels of the final microporous element. A proportion of 5 to 50%, calculated by weight of hydrocolloid solution, of microparticles will generally be useful.

The obtained layer of solidified hydrocolloid can be subjected to crosslinking instead of or after desiccation. For this purpose the microporous element is treated with crosslinking agents, for instance boric acid, sodium tetraborate, phosphorus oxide chloride, epichlorhydrin or bisoxiranes, such as 1,4-butanediol diglycidyl ether. Polyvinylalcohol can be crosslinked with sodium tetraborate by applying alkaline pH for gelation. Both desiccation and crosslinking have the effect of increasing the mechanical stability and solvent-resistance of the final microporous element.

In a preferred method, an aqueous hydrocolloid solution, in particular an aqueous solution of low melting agarose, which comprises solid microparticles slurried therein is applied to a microporous retainer, then a channel-sparing nonsolvent is permeated through the liquid layer while retaining the layer by means of a retaining tool as explained in detail below, then the retaining tool is removed and the hydrocolloid solution is caused to solidify. Finally, the solidified hydrocolloid layer is preferably subjected to crosslinking.

Useful microparticles are those discussed above in connection with the first embodiment of the invention. Additionally, microparticles coated with dextran, such as dextran-coated charcoal, dextran-coated poly(styrene-divinyl benzene) or biological structures absorbed to a porous support, such as ribosomes, nucleosomes, chromosomes, synaptosomes, phages, plasmids, all preadsorbed to porous or non-porous supporting beads, are to be mentioned. The microparticles preferably have a size from 0.5 µm to 500 µm.

In a third embodiment, the present invention relates to a method for producing a filter element by generating a microporous element, comprising the steps of providing a solution of a monomer or a mixture of monomers in a solvent, optionally comprising crosslinking monomers; applying the solution to at least one microporous retainer; and causing the monomer(s) to polymerize.

Preferably, the monomers are ethylenically unsaturated monomers such as vinylacetate or other vinylesters, acrylic acid and its derivatives. Preferred acrylic acid derivatives include acrylic acid amides, such as acrylamide, N,N-dimethyl acrylamide, acrylic acid diamine monoamide; acrylic esters, such as butyl acrylate, dodecyl acrylate, octadecyl acrylate, vinyl acrylate, 2,3-epoxypropyl acrylate, diethylaminoethyl acrylate, 2-dimethylaminoethyl acrylate, and 3-sulfopropyl acrylate.

Crosslinking monomers are monomers having two or more sites of ethylenical unsaturation. A preferred crosslinking monomer is N,N'-methylenebis(acrylamide). The presence of crosslinking monomers increases the mechanical stability and solvent-resistance of the final microporous element.

As a solvent water, dimethyl sulfoxide, dimethylformamide, dimethylacetamide, formamide, formic acid, acetic acid, 2,2,2-trichloro ethanol, or mixtures thereof are useful, depending on the nature of the monomer(s) used.

In a preferred method, an aqueous solution of acrylic acid or its derivatives, preferably together with crosslinking monomers, which comprises solid microparticles slurried therein is applied to a microporous retainer, then a channel-sparing nonsolvent is permeated through the liquid layer while retaining the layer by means of a retaining tool as explained in detail below, then the retaining tool is removed and the acrylic acid (derivatives) caused to polymerize.

A proportion of 1 to 10% by weight of crosslinking monomer(s), for example N,N'-methylenebis(acrylamide), calculated on the total monomer, is generally useful.

Also a mixture of hydrophilic and hydrophobic monomers is useful. In this case, there will be interactions between the polymerized units of the hydrophobic monomers of the growing molecule chains, which result in the formation of a crystalline hydrophobic backbone of the polymer formed. The units of the hydrophilic monomers will be orientated towards the enclaves filled with the solvent. Accordingly, a microporous element is obtained where the liquid-permeable channels are predominantly hydrophilic.

Sometimes the monomer or mixture of monomers is soluble in the solvent, whereas the growing polymer becomes increasingly insoluble in the selected solvent and finally precipitates from the solution. A mixture of solvents may be useful in some instances. A nonsolvent can be caused to diffuse into the layer of polymer solution after polymerization, in order to precipitate the polymer formed or to complete precipitation of the polymer formed. Also, a porogenic liquid, such as n-dodecanol or polypropylene oxides, can be present during polymerisation. The polymerisation may also result in a polymer gel swelled with the solvent used.

Polymerisation of the ethylenically unsaturated monomers is generally effected under the influence of free radicals. Free radicals are generated from the usual thermally decomposable initiators or a combination of free radical initiator and reducing agent. Usually, the initiator is added to the monomer solution. The concentration of the initiator is adjusted to provide sufficient pot life for application of the monomer solution to the microporous retainer. A combination of N,N'-tetramethyl ethylene diamine and a persulfate is especially preferred as initiator. In the alternative, an aqueous solution of initiator or initiator/reducing agent is used which is in contact by one or both sides of the liquid layer of monomer solution. Also photoinitiators such as riboflavin are useful for initiating the polymerization.

Instead of ethylenically unsaturated monomers, a monomer or mixture of monomers can be used which are capable of undergoing polyaddition or polycondensation. Among useful monomers are a combination of diamines with polyepoxides, such as a combination of ethylenediamine with 1,4-butanediol diglycidylether. Further examples include polypropylene oxide diamine and 1,4-butanediol, each with 1,4-butanediol diglycidyl ether.

This third embodiment involves the benefit of a lower viscosity of the monomer solution compared to a solution of a polymer of the same monomers at a corresponding concentration. The lower viscosity facilitates application of the solution to the microporous retainer.

In order to modify the adsorptive properties of the microporous element, the monomer solution may further comprise solid microparticles. Microparticles that are useful, have been discussed above in connection with the first embodiment of the invention.

Where microparticles are used in the first or the third embodiment as well as in the second embodiment, it is sometimes advantageous to permeate the microparticle-containing liquid layer with a channel-sparing non-solvent in order to displace excessive hydrocolloid solution, resin solution or monomer solution, respectively. The channel-sparing nonsolvent must be non-miscible with the solvents used. Permeation can be effected by pressing or drawing channel-sparing nonsolvent through the microparticle-containing layer whilst retaining the layer by means of a retaining tool consisting of a microporous filter. The hydrocolloid solution, resin solution or the monomer solution, respectively, is displaced from the larger interstices between the microparticles and accumulates at the points of contact of the microparticles. The channel-sparing nonsolvent keeps the interstices free, thus producing channels. The retaining tool is removed before or after solidification of the hydrocolloid or polymerisation of the monomer(s) or precipitation of the resin. Upon solidification/polymerisation/precipitation, the microparticles are linked one to another at their points of contact. The channel-sparing nonsolvent is removed by washing with a suitable liquid. As channel-sparing nonsolvent, silicon oil is preferred.

Also possible are combinations of two or more of the three embodiments discussed above. For example, a microparticle-containing layer could be prepared according to the third embodiment and subsequently be impregnated with a resin solution, in which resin is precipitated according to the first embodiment.

In this context, the various methods according to the three embodiments discussed above may also comprise the step of arranging at least one microporous membrane at the microporous retainer, wherein the microporous membrane is preferably formed of (regenerated) cellulose, polyamide, polyester, polypropylene (PP) or teflon.

In the various embodiments of the invention, the handling of very small liquid volumes is involved. Undesired evaporation of solvents before solidification can be avoided when all operations are performed in closed systems with solvent-saturated atmosphere. Preferably the temperature is precisely controlled.

The invention further relates to a filter element which is obtainable by the various embodiments discussed above and which comprises at least one microporous element including at least one microporous retainer and a spongy-form-polymer embedding microparticles and being linked to the at least one microporous retainer.

According to a preferred embodiment of the present invention, the microporous retainer, preferably comprising solid particles connected with each other and preferably being in the form of a disc, grid, large-pored membrane, membrane with supporting fabric, membrane with woven or unwoven characteristics, net, plate, rod and/or truncated cone (when being in the form of a membrane, the microporous retainer may comprise microparticles connected with each other), is formed of polypropylene (PP), propylene/ethylene copolymer, polyvinyl acetate, polyamide, polystyrene, polyethylene terephthalate (PET), polyether etherketon (PEEK), polycarbonate, poly(vinyl alcohol-co-ethylene), polyester, polyamide, glass, ceramics, quartz, silicon, silicon nitride, or mixtures thereof, stainless steel, or composite materials thereof with fibres or frames of glass, silicon dioxide, carbon or ceramics.

In this context, it should be mentioned that it is possible to produce the microporous element in a (microporous) mold and to process and use it, optionally after adapting it to a suitable size for instance by cutting, in the desired ways described above and below.

According to an advantageous embodiment of the present invention, the polymer is attached to at least one part of the outer surface of the microporous retainer. Additionally or alternatively, the microporous retainer can contain in its pores the polymer in such a manner that the pores have residual free spaces forming channels allowing the flow of a fluid through the filter element. In this case, the average diameter of the microparticles is preferably less than 50% of the average diameter of the pores.

According to a particularly inventive embodiment of the present invention, at least one microporous membrane is arranged at the microporous retainer, the microporous membrane being preferably formed of (regenerated) cellulose, polyamide, polyester, polypropylene (PP) or teflon.

The invention also pertains to an embodiment according to which the polymer comprises a resin. This resin can be selected from the group consisting of polyvinyl esters, partially deacylated polyvinyl esters, cellulose derivatives, polyamides, and mixtures thereof; or from the group consisting of poly(vinyl alcohol-co-ethylene), ethylene acrylic acid copolymer, ethylene acrylic ester copolymer, acrylamide vinylacetate copolymer, copolymer of acrylic acid diamine monoamide with vinylacetate, poly(vinyl alcohol-co-styrene), acrylamide acrylic ester copolymer, and mixtures thereof.

Alternatively, the polymer can comprise a solidified hydrocolloid solution, optionally desiccated or crosslinked, wherein the hydrocolloid is preferably selected from the group consisting of low melting agarose, starch, polyvinyl alcohol, and mixtures thereof.

Alternatively, the polymer can comprise the polymerisation product of a monomer selected from the group consisting of vinylesters, acrylic acid and its derivatives; or the polymerisation product of a diamine and a diepoxide.

According to a preferred embodiment of the present invention, the microporous element is arranged in a support member, which may have the form of a tube. In this context, at least one section of the tube may be of conical form, having a smaller and a larger cross-sectional end, and the microporous element may be located at or near to the smaller cross-sectional end.

According to an advantageous embodiment of the present invention, the outer and the inner surfaces of the microporous retainer are coated with a hydrophilic coating.

The inner wall of the tube can be coated with a hydrophilic coating, wherein it may be expedient to keep the edge of the tube next to the microporous element free of hydrophilic coating.

According to various particularly inventive embodiments of the present invention, the microporous element can be in the form of a
- disc,
- grid,
- membrane with supporting fabric,
- membrane with woven or unwoven characteristics,
- net,
- plate,
- rod, or
- truncated cone.

The invention finally relates to a multiple channel filter element, comprising a plurality of filter elements which are obtainable by the various embodiments discussed above.

The filter elements according to the invention can be applied for most versions of analytical or micro preparative liquid chromatography such as affinity chromatography, immuno chromatography as well as for binding studies enabling also the isolation of multi component binding complexes.

The filter elements may be especially useful in biotechnology, in molecular biology and in medical biochemical diagnostics, allowing low-cost screening of hundreds of samples in parallel.

The following advantages were achieved: The method prevents the dislocation of microparticles during processing of a liquid and also during transportation, improved or simplified by applying selected suitable techniques as described above. In addition to that, the method opens the way for far going miniaturization, avoids unspecific loss of biopolymer by presenting biocompatible surfaces, and saves cost by using expensive microparticle material in very small amounts. Transfer of separated substances from the filter to blotting membranes is possible without having problems with dead volumes. Production at low cost allows the filter to be used only once, avoiding the risk of contamination. The possibility of using microparticles with known or standardized adsorptive properties allows for the manufacture of filter elements with predictable adsorption characteristics and facilitates quality control.

The present invention will be described in more detail below with reference to the exemplary embodiments which are schematically illustrated in the following drawings, in which:
- Fig. 1: shows a filter element obtained according to a first embodiment of the present invention;
- Fig. 2: shows a filter element obtained according to a second embodiment of the present invention;
- Fig. 3: shows a filter element obtained according to a third embodiment of the present invention;
- Fig. 4: shows a filter element obtained according to a fourth embodiment of the present invention; and
- Fig. 5: illustrates the mode of operation of the channel-sparing nonsolvent.

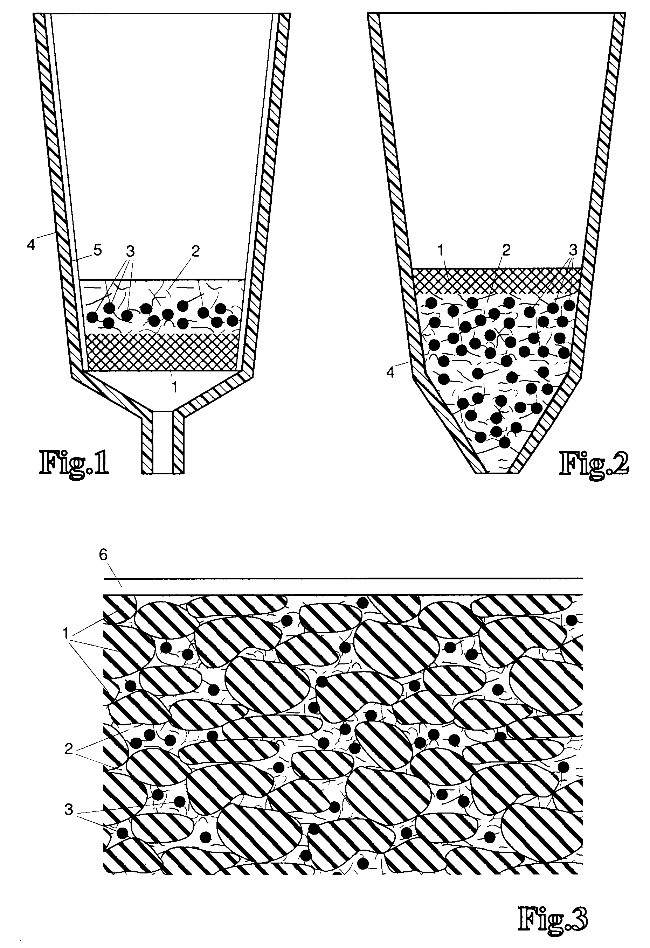

Fig. 1 shows a filter element obtained according to a first embodiment of the present invention. The filter element comprises a microporous element including a microporous retainer 1 and a spongy-form-polymer 2 embedding microparticles 3 and being linked to the microporous retainer 1. In this context, Fig. 1 shows that the polymer 2 is attached to the top surface of the microporous retainer 1.

Though it cannot be explicitly taken from Fig. 1, it should be mentioned that the polymer 2 advantageously comprises a resin selected from the group consisting of polyvinyl esters, partially deacylated polyvinyl esters, cellulose derivatives, polyamides, and mixtures thereof. The resin may also be selected from the group consisting of poly(vinyl alcohol-co-ethylene), ethylene acrylic acid copolymer, ethylene acrylic ester copolymer, acrylamide vinylacetate copolymer, copolymer of acrylic acid diamine monoamide with vinylacetate, poly(vinyl alcohol-co-styrene), acrylamide acrylic ester copolymer, and mixtures thereof. Alternatively, the polymer 2 comprises a solidified hydrocolloid solution, optionally desiccated or crosslinked, wherein the hydrocolloid can be selected from the group consisting of low melting agarose, starch, polyvinyl alcohol, and mixtures thereof. Finally, it should not be overseen that the polymer 2 can also comprise the polymerisation product of a monomer selected from the group consisting of vinylesters, acrylic acid and its derivatives; or the polymerisation product of a diamine and a diepoxide.

The microporous element, as shown in Fig. 1, can be generated in situ from a liquid precursor. The liquid precursor readily takes a shape that matches the shape of the inner surface of a moisture-impervious support member 4 as well as the shape of the microporous retainer 1. Any imperfections like burrs etc. of the aperture of the moisture-impervious support member 4 are hereby compensated for. Upon solidification, a microporous element is obtained, which snugly fits into the aperture of the support member 4 and has complete circumferential contact to the walls thereof.

Preferably, the support member 4 is formed of a plastic such as polypropylene (PP), polyethylene (PE), propylene/ethylene copolymer, polyvinyl acetate, polyamide, polystyrene, polyethylene terephthalate (PET), polyether etherketon (PEEK), polycarbonate, polyethylene vinylacetate, poly(vinyl alcohol-co-ethylene), polyester, polyamide, glass, ceramics, quartz, silicon nitride, or mixtures thereof. Also included are composite materials of plastic with fibres or frames of glass, silicon dioxide, carbon or ceramics.

As can be taken from Fig. 1, the support member 4 has the form of a tube, preferably with circular cross-section, and the microporous element is generated at or near to one edge of the tube. In order to facilitate sample application and for accommodation of greater sample volumes, preferably at least a section of the tube is of conical form, having a smaller and a larger cross-sectional end, with the microporous element generated at or near to the smaller cross-sectional end. For example, the support member 4 is a pipette tip such as commonly used with Eppendorf pipettes. In order to prevent dislocation, such as slipping, of the microporous element formed, the tube may have a structured inner surface, like a surface with rings or grooves.

It is also envisaged to arrange a plurality of support members 4, for example up to several hundreds, in parallel alignment to form a multiple channel filter element. The multiple channel filter element will allow a biological sample to be tested simultaneously against hundreds of reagents. Alternatively, the support member 4 can comprise a plurality of apertures, for instance in the form of parallel bores or tapered holes. When the multiple channel element is to be evaluated optically, it is convenient to include an opacifying agent such as carbon black into the support member material to prevent interference from neighbouring channels.

There are several possibilities of applying the liquid phase to the aperture of the support member 4. The various methods will be exemplified with reference to a tubular support member 4 but will not be limited thereto. As the liquid phase in general is a solution the terms "liquid phase" and "solution" will be used interchangeably unless otherwise required by the context. Conveniently, application of the solution to the aperture is accomplished by capillary action. The support member 4, for example a tube, is dipped into the solution and raised again. Due to the surface tension of the solution, a liquid layer will remain in the aperture over the cross-section of the aperture. If, for example, the viscosity of the solution is too high different methods for applying the solution to the aperture may be adopted. The ascending force of the solution may be enhanced by temporarily sealing the distant end of the tube, slightly heating the tube, then dipping the tube with its free end into the solution, and allowing the tube to cool to ambient temperature, whereby the solution is drawn into the tube by the volume contraction of the enclosed air. Alternatively, the solution can be introduced from the distant end of the tube and may be brought into its final position by centrifugation. Preferably, the end at or near to which the microporous element is to be formed is sealed with a cap or by pressing against an elastic plate. The cap or the elastic plate preferably has microgrooves or micropores for allowing the enclosed air to escape. Then the arrangement is subjected to centrifugation during which the solution migrates to the end of the tube where it is retained at least partially by the cap or elastic plate. The cap or the elastic plate may be removed before or after solidification, in particular before solidification of the solution or of a part of the solution.

The practitioner often faces the problem that aqueous samples that are introduced in containers made of hydrophobic material tend to adhere to the wall in drops rather than flowing down and collecting at the bottom. In order to avoid this phenomena, the inner wall of a tube which acts as support member 4 for a filter element according to the invention, may be coated with a hydrophilic coating 5. The hydrophilic coating 5 will prevent aqueous samples from adhering to the wall of the support member 4. Also, there is no adsorptive loss of biopolymers due to adsorption to the wall of the support member 4. If the inner wall of the tube is coated with the hydrophilic coating 5, the edge of the tube next to the microporous element is preferably kept free of hydrophilic coating 5. This will prevent sample liquids which exit from the edge of the tube next to the microporous element from creeping to adjacent filter elements, especially in the embodiment of the present invention where a plurality of filter elements is arranged to form a multiple channel filter element.

The hydrophilic coating 5 is conveniently prepared by applying a solution of one or more polyvinyl esters in an organic solvent to the inner wall of the tube, allowing the organic solvent to evaporate, and partially hydrolyzing the resulting layer of polyvinyl ester at the surface thereof. Suitable polyvinyl esters include polyvinyl acetate (a molecular weight of about 500000 is generally suitable), polyvinyl propionate and polyvinyl stearate.

Partial hydrolysis of the layer of polyvinyl ester is performed by contacting the layer of polyvinyl ester with an alkaline aqueous solution, such as sodium hydroxide. The edge of the tube next to the microporous element can be kept free of hydrophilic coating 5 by applying the solution of polyvinyl ester only to a part of the inner wall of the tube, for example by partially immersing the tube into the solution of polyvinyl ester. After hydrolysis, the microporous element can be generated at or near to the edge of the tube, that has not been brought into contact with the polyvinyl ester solution. Alternatively, the entire inner wall of the tube can be coated with polyvinyl ester, but only part thereof is hydrolyzed.

Alternatively, the hydrophilic coating 5 can be generated by using a high molecular weight polypropylene glycol, for example having a molecular weight of 4000 or higher. Such polypropylene glycols show moderate to good solubility in cold water, however poor solubility in warm water. Accordingly, a cold aqueous solution of polypropylene glycol, for example at 0°C to 4°C, might be introduced into the tube and subsequently the temperature is raised, for instance to about 20°C. The polypropylene glycol coming out of the solution shows a high affinity to the inner wall of the tube and deposits thereon as a thin layer. Excess polypropylene glycol solution is then removed. Additional chemical crosslinking may be advantageous in some cases.

Fig. 2 shows a filter element obtained according to a second embodiment of the present invention. The filter element comprises a microporous element including a microporous retainer 1 and a spongy-form-polymer 2 embedding microparticles 3 and linked to the microporous retainer 1. In this context, Fig. 2 shows that the polymer 2 is attached to the bottom surface of the microporous retainer 1.

It can be taken from Fig. 2 that the microporous element is arranged in a moisture-impervious support member 4 having the form of a tube. One section of the tube is of conical form, having a smaller and a larger cross-sectional end, and the microporous element is located at or near to the smaller cross-sectional end.

Fig. 3 shows a filter element obtained according to a third embodiment of the present invention. It is illustrated in Fig. 3 that the microporous retainer 1 comprises solid particles connected with each other.

Though it cannot be explicitly taken from Fig. 3, it should be mentioned that the microporous retainer 1 is advantageously formed of polypropylene (PP), propylene/ethylene copolymer, polyvinyl acetate, polyamide, polystyrene, polyethylene terephthalate (PET), polyether etherketon (PEEK), polycarbonate, poly(vinyl alcohol-co-ethylene), polyester, polyamide, glass, ceramics, quartz, silicon, silicon nitride, or mixtures thereof, stainless steel, or composite materials thereof with fibres or frames of glass, silicon dioxide, carbon or ceramics. In this context, the microporous retainer 1 can be embodied in the form of a disc, grid, large-pored membrane, membrane with supporting fabric, membrane with woven or unwoven characteristics, net, plate, rod and/or truncated cone. When being in the form of a membrane, the microporous retainer 1 may comprise microparticles connected with each other.

In this context, it should be mentioned that it is possible to produce the microporous element in a (microporous) mold and to process and use it, optionally after adapting it to a suitable size for instance by cutting, in the desired ways described above and below.

Fig. 3 shows that the microporous retainer 1 contains in its pores the polymer 2 in such a manner that the pores have residual free spaces forming channels allowing the flow of a fluid through the filter element. In this connection, the average diameter of the microparticles 3 is less than 50% of the average diameter of the pores.

A microporous membrane 6 is arranged at the top surface of the microporous retainer 1. Though it cannot be explicitly taken from Fig. 3, it should be mentioned that the microporous membrane 6 is advantageously formed of (regenerated) cellulose, polyamide, polyester, polypropylene (PP) or teflon.

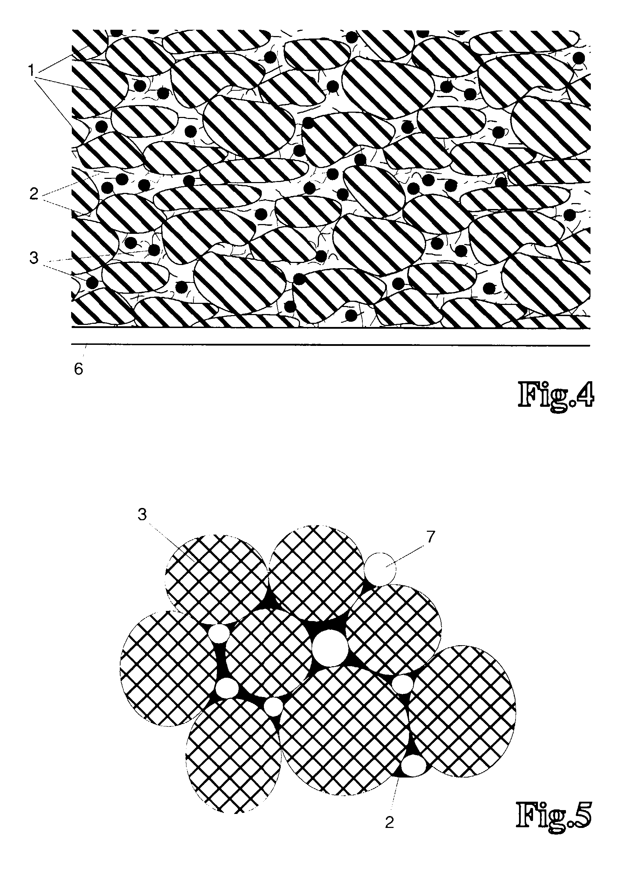

Fig. 4 shows a filter element obtained according to a fourth embodiment of the present invention. In Fig. 4, the microporous membrane 6 is arranged at the bottom surface of the microporous retainer 1.

Fig. 5 illustrates the mode of operation of the channel-sparing nonsolvent. The channel-sparing nonsolvent 7, shown in cross-section, keeps the larger interstices between the microparticles 3 free. The solution of resin, hydrocolloid or monomer 2 accumulates at the points of contact of the microparticles 3.

The invention will now be further illustrated by the following examples.

In this context, microfilters of example 5 and 6 are especially useful when labile macromolecules such as enzymes, antibodies or receptor proteins are bound to microparticles. The solidification occurs under biocompatible conditions with respect to temperature, acidity and tonicity. Microfilters of example 7 are especially useful for covalent immobilization. Microfilters of example 8 are useful when organic solvents are applied.

### Example 1:

### Production of biocompatible surface of the impermeable element and production of microporous element by diffusion of nonsolvent.

A solution of 3% polyvinyl acetate (w/v) in acetone (molecular weight 500000, Cat. No. 38793-2; Aldrich, Steinheim G) was applied to the inner surface of a 100 µl-filtertip (Cat. No. 00 30 067.010; Eppendorf, Hamburg G) and was drained over blotting paper. After evaporating at ambient temperature and heating at 70°C overnight, the tip was filled with 1 ml of 1 N-NaOH in water, and a partial reaction was performed at 24°C for 30 min. Finally, the tip was washed and dried. In addition, a solution was prepared, by dissolving 1 g of poly(vinyl alcohol-co-ethylene) of 44 mol % ethylene content (Cat. No. 41, 410-7; Aldrich, Steinheim G) with 4 ml dimethyl sulfoxide at 100°C. 100 µg of reversed-phase material on silica gel (C₁₈, 30 nm pore, 5 µm bead; Vydac, Hesperia, CA, USA) was sonicated with the polymer solution. A volume of 30 µl of suspension was taken up at 40°C. After closing the smaller aperture of the filtertip, water was introduced into the tip as a vapor. One hour later, 50 µl of water was applied directly over the solidifying liquid phase to obtain further diffusional precipitation.

### Example 2:

### Inclusion of microparticles into a microporous retainer.

A solution of vinylacetate (Cat. No. 38793-2; Aldrich, Steinheim G) was prepared using 1 g of vinylacetate and 19 ml of acetic acid. A suspension of microparticles (Cibacron blue F3GA; Si 300 polyol, 5 µm; Cat. No. 43532; Serva, Heidelberg G) was obtained using 1 g of particles and 4 ml of solution. The suspension was applied to a disc of polypropylene frit (porosity 0) which was placed on a porous teflon membrane held flat on a vacuum suction device. When filtration was completed, water was added for formation of spongy-form-polymer.

The microporous element thus formed was inserted and held in the support under radial compression.

### Example 3:

### Production by precipitation of semisynthetic polymer with inclusions of a mixture of different types of microparticles.

A mixture was prepared from three different types of porous microparticles: 100 mg of anion exchanger based on silica gel (Adsorbex-SAX, Cat. No. 19845; Merck, Darmstadt G) 100 mg of cation exchanger (Adsorbex-SCX, Cat. No. 19846) and 100 mg reversed-phase RP8 (Cat. No. 9362). After sonification with 1ml of dimethyl sulfoxide and centrifugation, the wet sediment was supplemented with 600 µl of 15% cellulose propionate (average molecular weight 200 000; Cat. No. 18462-4; Aldrich, Steinheim, G) in dimethyl sulfoxide, prepared at 95°C. A modified 100 µl-filtertip (Cat. No. 00 30 067.010; Eppendorf, Hamburg G) with biocompatible surface modification was filled with 20 µl of liquid and layered with 30 µl of silicon oil and finally layered with 50 µl distilled water. Positive pressure was applied until the water phase passed finally the microfilter.

### Example 4:

### Preparation of a microporous element using a pre-fabricated composite membrane with integrated supporting web as retainer.

1 g of poly(vinyl alcohol-co-ethylene) (Cat. No. 41409-3; Aldrich, Steinheim G) was dissolved with 9 ml of dimethyl sulfoxide. 1 g of silica gel (20 µm, 60 nm; Merck, Darmstadt G) was suspended therein. 3 ml of suspension was warmed up to 60°C and was evenly distributed over the membrane (regenerated cellulose on polypropylene web; Cat. No. U 3880; Sigma, Deisenhofen G) and held flat on a vacuum filtration device on a plane frit. After completing filtration, finally water was applied for solidification. Discs were cut with a cutting device for insertion into a hollow support.

### Example 5:

### Production by crosslinking of reversible hydrogel in the presence of channel-sparing nonsolvent at 0°C.

A solution of 5% (w/v) poly(vinyl alcohol) (molecular weight 124 000 - 186 000, 99% hydrolyzed; Cat. No. Aldrich, 36 306-5; Steinheim G) in water was prepared at 100°C. 4 ml of solution were mixed with 1 ml of 50 mM sodium tetraborate 4.7 and cooled to 0°C. Finally, 1 g of enzyme-containing SAX particles (Adsorbex-SAX, Merck, Darmstadt G) were added. 100 µl of this suspension were filled into a modified 1 ml-filtertip (Cat. No. 00 30 067.037; Eppendorf, Hamburg G) with a biocompatible surface. The tip was layered with 100 µl silicon oil. After applying positive pressure, migration of the silicon oil was achieved into the granular bed. In order to achieve crosslinking, a final layer of 50 mM sodium tetraborate pH 8.6 solution was forced through the microporous element.

### Example 6:

### Production by using a reversible hydrogel in the presence of a channel-sparing non-solvent.

1 g of DEAE-Si 300, 10 µm-size (Cat. No. 43536; Serva, Heidelberg G) was mixed with 5 ml of a 2% agarose solution at 40°C. The agarose (low melt preparative agarose; Cat. No. 162-0017; Bio-Rad, Munich, G) had been dissolved at 90°C in 3% sucrose solution. Then, 100 µl of liquid phase was taken up into a modified 1 ml-filtertip (Cat. No. 00 30 067.037; Eppendorf, Hamburg G) with biocompatible surface coating, as described in example 1. After addition of an upper layer of 500 µl silicon oil at 40°C, positive pressure was applied until 400 µl had passed the microporous retainer. Solidification was achieved at 6°C. Finally the silicon oil was expelled by filtration of 500 µl sucrose solution.

### Example 7:

### Production by polycondensation in presence of channel-sparing nonsolvent.

100 mg of silicagel (Lichrosorb Si 100, 7 µm size; Cat. No. 9340; Merck, Darmstadt, G) were sonicated with 500 µl of monomer solution (by vol: 5 parts of 1,4 - butanediol diglycidyl ether (Cat. No. 22,089-2; Aldrich, Steinheim G), one part dimethyl sulfoxide and one part ethylenediamine). 35 µl of liquid phase were taken up into a modified 10 µl-filtertip (Cat. No. 00 30 067.002; Eppendorf, Hamburg G). After layering 70 µl of silicon oil onto the liquid-phase, positive pressure was applied (at least one bar) until 30 µl of silicon oil were flown through the filtertip. Solidification was achieved by curing in a closed system. Finally, the filter element was washed with distilled water and suitable buffer.

### Example 8:

### Production by polymerisation in the presence of channel-sparing nonsolvent.

100 mg of silica gel type anion exchanger of HPLC quality (DEAE-Si 300, 10 µm; Cat. No. 43536; Serva, Heidelberg G) were sonicated with ice-cold 500 µl monomer solution (By weight: 26% acrylamide; 0,7% bis acrylamide; 170 mM Tris HCl pH 8,8; 0,05% tetramethyl ethylenediamine (Cat. No. 8133; Sigma, Deisenhofen) 0,08% sodium persulfate).

All further steps were done as described in example 7 except that the temperature was held between 0°C and 2°C as during the flushing step with silicon oil. Finally, solidification was achieved by curing at 45°C.

### Example 9:

### Production using hydrogel and microparticles with reformation of channels by means of drying.

One ml of a 2% (w/v) solution of agarose (Bio-Rad, Munich G) was mixed and sonicated with 200 mg of microporous titan dioxide (YMC-Gel, TIAOS 20 NP; YMC Europe, Schermbeck G) at 40°C. At the same temperature, 50 µl of liquid was taken up into a filtertip that was provided with biocompatible surface coating (see example 1). Using low speed centrifugation (80 rounds per minute) in a swing-out-rotor, the pressure was adjusted in a way that flow was stopped when the microparticles were just beginning to be exposed. Solidification was achieved at 6°C. Drying was done at ambient temperature and finally over P₂O₅, at 1 mb.

### Example 10:

### Isolation of multimolecular complexes consisting of oligonucleotides and specific macromolecules, noncovalently bound together.

A labeled oligonucleotide probe was incubated with nuclear extract, and 8 µl were filtered over a polyacrylamide - DEAE microfilter (example 8) which was washed with 40 µl buffer. The free oligonucleotide was retained and the complexed form was obtained in the eluate within some minutes.

## Claims

1. A method for producing a filter element by generating a microporous element, comprising the steps of
a) providing a liquid suspension of microparticles;
b) applying the liquid suspension to at least one microporous retainer; and
c) causing solidification in spongy form of at least part of the suspension.

2. A method for producing a filter element by generating a microporous element, comprising the steps of
a) providing a solution of a synthetic or semi-synthetic resin in a solvent, including microparticles suspended therein;
b) applying the solution to at least one microporous retainer; and
c) causing a nonsolvent to diffuse into the layer, which nonsolvent is miscible with the solvent, whereby the synthetic resin precipitates to form the microporous element.

3. The method according to claim 2, wherein the resin is selected from the group consisting of polyvinyl esters, partially deacylated polyvinyl esters, cellulose derivatives, polyamides, and mixtures thereof.

4. The method according to claim 2, wherein the resin comprises both hydrophilic and hydrophobic segments within its molecules.

5. The method according to claim 4, wherein the resin is selected from the group consisting of poly(vinyl alcohol-co-ethylene), poly(vinyl alcohol-co-vinylacetate), ethylene acrylic acid copolymer, ethylene acrylic ester copolymer, ethylene acrylamide copolymer, acrylic acid vinylacetate copolymer, acrylamide vinylacetate copolymer, copolymer of acrylic acid diamine monoamide with vinylacetate, poly(vinyl alcohol-co-styrene), acrylamide acrylic ester copolymer, and mixtures thereof.

6. The method according to anyone of claims 2 to 5, wherein the solvent is selected from the group consisting of dimethyl sulfoxide, dimethylformamide, dimethylacetamide, formamide, formic acid, acetic acid, 2,2,2-trichloro ethanol, and mixtures thereof.

7. The method according to anyone of claims 2 to 6, wherein the nonsolvent is selected from the group consisting of water, alcohols having one to four carbon atoms, ammonia, ethylacetate, acetone, ethylene diamine, and mixtures thereof.

8. A method for producing a filter element by generating a microporous element, comprising the steps of
a) providing an aqueous solution of a hydrocolloid, which comprises microparticles slurried therein;
b) applying the solution to at least one microporous retainer;
c) causing the hydrocolloid solution to solidify; and
d) optionally, one or both of desiccating and crosslinking the solidified hydrocolloid solution.

9. The method according to claim 8, wherein the hydrocolloid is selected from the group consisting of low melting agarose, starch, polyvinyl alcohol, and mixtures thereof.

10. The method according to claim 8 or 9, wherein the microparticles have a size from 0.5 µm to 30 µm.

11. The method according to anyone of claims 8 to 10, wherein the hydrocolloid solution is subjected to crosslinking by sodium tetraborate.

12. The method according to anyone of claims 1 to 11, wherein the adsorptive properties of the final microporous element are modified by the microparticles.

13. A method for producing a filter element by generating a microporous element, comprising the steps of
a) providing a solution of a monomer or a mixture of monomers in a solvent, optionally comprising crosslinking monomers;
b) applying the solution to at least one microporous retainer; and
c) causing the monomer(s) to polymerize.

14. The method according to claim 13, wherein the monomer is selected from the group consisting of vinylesters, acrylic acid and its derivatives, and polymerization is effected under the influence of free radicals.

15. The method according to claim 13 or 14, wherein the monomer solution further comprises microparticles for modifying the adsorptive properties of the final microporous element.

16. The method according to anyone of claims 1 to 12 or 15, wherein the microporous element is permeated with a channel-sparing nonsolvent.

17. The method according to claim 16, wherein the channel-sparing nonsolvent is silicon oil.

18. The method according to anyone of claims 1 to 17, wherein the step of applying is accomplished by capillary action.

19. The method according to anyone of claims 1 to 18, further comprising the step of arranging at least one microporous membrane at the microporous retainer.

20. The method according to claim 19, wherein the microporous membrane is formed of (regenerated) cellulose, polyamide, polyester, polypropylene (PP) or teflon.

21. The method according to anyone of claims 1 to 20, wherein the microporous retainer comprises solid particles connected with each other.

22. The method according to anyone of claims 1 to 21, wherein the microporous retainer is formed of polypropylene (PP), propylene/ethylene copolymer, polyvinyl acetate, polyamide, polystyrene, polyethylene terephthalate (PET), polyether etherketon (PEEK), polycarbonate, poly(vinyl alcohol-co-ethylene), polyester, polyamide, glass, ceramics, quartz, silicon, silicon nitride, or mixtures thereof, stainless steel, or composite materials thereof with fibres or frames of glass, silicon dioxide, carbon or ceramics.

23. The method according to anyone of claims 1 to 22, wherein the microporous retainer is in the form of a disc, grid, large-pored membrane, membrane with supporting fabric, membrane with woven or unwoven characteristics, net, plate, rod and/or truncated cone.

24. The method according to claim 23, wherein the microporous retainer, when being in the form of a membrane, comprises microparticles connected with each other.

25. The method according to anyone of claims 1 to 24, wherein the microporous element is generated within a hollow moisture-impervious support.

26. The method according to claim 25, wherein the hollow moisture-impervious support has two open ends.

27. The method according to claim 25 or 26, wherein the support is formed of polypropylene (PP), polyethylene (PE), propylene/ethylene copolymer, polyvinyl acetate, polyamide, polystyrene, polyethylene terephthalate (PET), polyether etherketon (PEEK), polycarbonate, polyethylene vinylacetate, poly(vinyl alcohol-co-ethylene), polyester, polyamide, glass, ceramics, quartz, silicon nitride, or mixtures thereof, or composite materials thereof with fibres or frames of glass, silicon dioxide, carbon or ceramics.

28. The method according to anyone of claims 25 to 27, wherein the support has the form of a tube, and the microporous element is generated at or near to one edge of the tube.

29. The method according to claim 28, wherein at least a section of the tube is of conical form, having a smaller and a larger cross-section end, and the microporous element is generated at or near to the smaller cross-section end.

30. The method according to anyone of claims 1 to 29, wherein the outer and the inner surfaces of the microporous retainer are coated with a hydrophilic coating.

31. The method according to claim 28 or 29, wherein the inner wall of the tube is coated with a hydrophilic coating.

32. The method according to claim 31, wherein the edge of the tube next to the microporous element is kept free of hydrophilic coating.

33. The method according to anyone of claims 30 to 32, wherein the coating is formed by applying a solution of one or more polyvinyl esters in an organic solvent, removing the organic solvent, and partially hydrolyzing the resulting layer of polyvinyl ester at the surface thereof.

34. A filter element comprising at least one microporous element including at least one microporous retainer and a spongy-form-polymer embedding microparticles and being linked to the at least one microporous retainer.

35. The filter element according to claim 34, wherein the microporous retainer comprises solid particles connected with each other.

36. The filter element according to claim 34 or 35, wherein the microporous retainer is formed of polypropylene (PP), propylene/ethylene copolymer, polyvinyl acetate, polyamide, polystyrene, polyethylene terephthalate (PET), polyether etherketon (PEEK), polycarbonate, poly(vinyl alcohol-co-ethylene), polyester, polyamide, glass, ceramics, quartz, silicon, silicon nitride, or mixtures thereof, stainless steel, or composite materials thereof with fibres or frames of glass, silicon dioxide, carbon or ceramics.

37. The filter element according to anyone of claims 34 to 36, wherein the microporous retainer is in the form of a disc, grid, large-pored membrane, membrane with supporting fabric, membrane with woven or unwoven characteristics, net, plate, rod and/or truncated cone.

38. The filter element according to claim 37, wherein the microporous retainer, when being in the form of a membrane, comprises microparticles connected with each other.

39. The filter element according to anyone of claims 34 to 38, wherein the polymer is attached to at least one part of the outer surface of the microporous retainer.

40. The filter element according to anyone of claims 34 to 39, wherein the microporous retainer contains in its pores the polymer in such a manner that the pores have residual free spaces forming channels allowing the flow of a fluid through the filter element.

41. The filter element according to claim 40, wherein the average diameter of the microparticles is less than 50% of the average diameter of the pores.

42. The filter element according to anyone of claims 34 to 41, wherein at least one microporous membrane is arranged at the microporous retainer.

43. The filter element according to claim 42, wherein the microporous membrane is formed of (regenerated) cellulose, polyamide, polyester, polypropylene (PP) or teflon.

44. The filter element according to anyone of claims 34 to 43, wherein the polymer comprises a resin selected from the group consisting of polyvinyl esters, partially deacylated polyvinyl esters, cellulose derivatives, polyamides, and mixtures thereof.

45. The filter element according to anyone of claims 34 to 43, wherein the polymer comprises a resin selected from the group consisting of poly(vinyl alcohol-co-ethylene), ethylene acrylic acid copolymer, ethylene acrylic ester copolymer, acrylamide vinylacetate copolymer, copolymer of acrylic acid diamine monoamide with vinylacetate, poly(vinyl alcohol-co-styrene), acrylamide acrylic ester copolymer, and mixtures thereof.

46. The filter element according to anyone of claims 34 to 43, wherein the polymer comprises a solidified hydrocolloid solution, optionally desiccated or crosslinked.

47. The filter element according to claim 46, wherein the hydrocolloid is selected from the group consisting of low melting agarose, starch, polyvinyl alcohol, and mixtures thereof.

48. The filter element according to anyone of claims 34 to 43, wherein the polymer comprises the polymerisation product of a monomer selected from the group consisting of vinylesters, acrylic acid and its derivatives.

49. The filter element according to anyone of claims 34 to 43, wherein the polymer comprises the polymerisation product of a diamine and a diepoxide.

50. The filter element according to anyone of claims 34 to 49, wherein the microporous element is arranged in a support member.

51. The filter element according to claim 50, wherein the support member has the form of a tube.

52. The filter element according to claim 51, wherein at least one section of the tube is of conical form, having a smaller and a larger cross-sectional end, and the microporous element is located at or near to the smaller cross-sectional end.

53. The filter element according to anyone of claims 34 to 52, wherein the outer and the inner surfaces of the microporous retainer are coated with a hydrophilic coating.

54. The filter element according to claim 51 or 52, wherein the inner wall of the tube is coated with a hydrophilic coating.

55. The filter element according to claim 54, wherein the edge of the tube next to the microporous element is free of hydrophilic coating.

56. The filter element according to anyone of claims 34 to 55, wherein the microporous element is in the form of a disc, grid, membrane with supporting fabric, membrane with woven or unwoven characteristics, net, plate, rod or truncated cone.

57. A multiple channel filter element, comprising a plurality of filter elements according to anyone of claims 34 to 56.
